# FASCICULE DE BREVET EUROPEEN

(11) **EP 2 593 317 B1**
(45) Date de publication et mention de la délivrance du brevet: **20.04.2016**
(21) Numéro de dépôt: 11728848.0
(22) Date de dépôt: 01.07.2011
(51) Int. Cl.: B60C 23/04, G01G 19/08

(54) **PROCEDE D'ESTIMATION DE LA CHARGE DYNAMIQUE PORTEE PAR UN PNEUMATIQUE D'UN VEHICULE**
VERFAHREN ZUR FESTSTELLUNG DER DYNAMISCHEN BELASTUNG EINES FAHRZEUGSREIFENS
METHOD FOR ESTIMATING DYNAMICAL TIRE LOADING

(30) Priorité: 13.07.2010 FR 1055696
(43) Date de publication de la demande: 22.05.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: LEMINEUR, Vincent, F-63040 Clermont-Ferrand Cedex 9 (FR)
(74) Mandataire: Le Cam, Stéphane Georges Elie
(86) Numéro de dépôt international: PCT/EP2011/061099
(87) Numéro de publication internationale: WO 2012/007296

(56) Documents cités:
- US-A1- 2007 204 685
- US-A1- 2010 063 669

## Description

L'invention concerne un procédé d'estimation de la charge dynamique portée par un pneumatique d'un véhicule en roulage sur une période donnée. Le document US 2010 63 669 A1 divulgue un procédé détectant une charge de roue en accord avec ce préambule de la revendication 1. L'invention propose encore un procédé d'estimation de la charge portée par ledit pneumatique.

Bien que non limitée à de telles applications, l'invention sera plus particulièrement décrite en référence à des pneumatiques destinés à équiper des véhicules de type dumper. Un dumper est un engin de « Génie Civil », destiné à porter de lourdes charges, et circulant dans des carrières ou des mines.

Ces véhicules comprennent habituellement un train avant directeur comportant deux roues directrices et un train arrière, le plus souvent rigide, comportant quatre roues motrices réparties deux à deux de chaque côté. Un train est défini comme un ensemble des éléments permettant de relier la structure fixe du véhicule au sol.

Dans le cas de ces véhicules, notamment destinés à des usages dans des mines ou carrières pour le transport de charges, les difficultés d'accès et les exigences de rendement conduisent les fabricants de ces véhicules à augmenter leur capacité de charge. Il s'ensuit que les véhicules sont de plus en plus grands et donc eux-mêmes de plus en plus lourds et peuvent transporter une charge de plus en plus importante. Les masses actuelles des ces véhicules peuvent atteindre plusieurs centaines de tonnes et il en est de même pour la charge à transporter ; la masse globale peut atteindre jusqu'à 600 tonnes.

La capacité de charge du véhicule étant directement liée à celle des pneumatiques, la conception des pneumatiques doit être adaptée à ces évolutions pour fournir des pneumatiques capables de supporter les contraintes d'utilisation.

Il est donc souhaitable de mieux connaître l'usage qui est fait de ces pneumatiques, et plus particulièrement des charges qu'ils sont amenés à porter lors de leur utilisation. Celles-ci sont d'une part liées à la charge transportée et d'autre part à l'utilisation du véhicule et plus particulièrement à la nature du sol et au tracé des voies sur lesquelles ledit véhicule circule.

La connaissance de ces charges peut permettre de mieux comprendre l'origine d'un dommage constaté sur un pneumatique voire d'aider à la conception même des pneumatiques.

En effet, la demande actuelle s'orientant toujours vers une hausse de la capacité de charge de ces engins, les différents paramètres énoncés précédemment conduisent les concepteurs de pneumatiques à optimiser lesdits pneumatiques notamment en tenant compte de l'utilisation de ceux-ci.

Différentes méthodes sont déjà utilisées pour déterminer la charge portée par chacun des pneumatiques du véhicule.

Une première méthode couramment utilisée consiste à mesurer la pression dans les éléments de suspension du véhicule. Cette pression est directement liée à la charge portée par l'élément de suspension. Toutefois, les frottements et les amortissements au sein de ces éléments de suspension faussent l'estimation qui peut être faite des charges réellement portées, et notamment des charges dynamiques. En outre, notamment en ce qui concerne le train arrière, il est quasiment impossible de définir précisément la répartition de charge entre les différents pneumatiques, notamment du fait de la présence de roues jumelées de part et d'autre du châssis.

Une autre méthode connue pour la détermination de la charge portée par le pneumatique consiste à mesurer une hauteur par rapport au sol, par exemple à l'aide d'un télémètre à ultrasons ou bien laser, et à en déduire la déflexion dudit pneumatique, ladite déflexion étant directement liée à la charge et à la pression. Une telle mesure, connaissant la pression de gonflage, est effectivement le reflet de la charge dans la mesure où le pneumatique circule sur un sol plan. Mais un roulage sur piste constituée d'un sol meuble et/ou sur piste avec la présence d'ornières ou de cailloux perturbe totalement l'interprétation de la mesure. En effet, ces dispositifs étant habituellement positionnés de manière décalée sur le côté du pneumatique, la mesure est faussée par des variations locales de la hauteur du sol. En outre, la mise en oeuvre d'une telle mesure est très délicate car les systèmes de mesures sont sensibles aux conditions de mesures et notamment la poussière, la température peuvent perturber les mesures.

Une autre méthode consiste à considérer que l'air de gonflage peut être assimilé à un gaz parfait et donc satisfait la relation : p.V= n.R.T, traduisant une relation entre la pression p, le volume V et la température T, n étant le nombre de moles de gaz et R étant la constante universelle des gaz parfaits. La déflexion d'un pneumatique qui est liée à la charge portée par celui-ci entraîne une variation du volume interne de celui-ci. Les mesures de pression et de température dans le pneumatique permettent ainsi d'en déduire les variations de volume et donc les variations de charges portées par le pneumatique. Il s'avère que l'introduction d'un capteur de température dans la cavité du pneumatique n'est pas toujours aisée, notamment du fait de la courbure des valves. En outre, la dimension des pneumatiques de dumper conduit à des inhomogénéités de températures au sein de la cavité du pneumatique. En effet, il existe des gradients de température de l'air relativement importants liés à l'utilisation de ces pneumatiques : d'une part, les phases d'arrêt ne permettent pas un brassage constant de l'air et d'autre part, il existe des échanges de chaleur très importants à proximité de la jante et du pneumatique.

Les inventeurs se sont ainsi donnés pour mission de fournir une estimation de la charge portée par des pneumatiques en roulage plus précise et/ou plus simple à mettre en oeuvre que celles actuellement à disposition à partir des méthodes évoquées précédemment.

Ce but a été atteint selon l'invention par un procédé d'estimation de la charge dynamique portée par un pneumatique d'un véhicule en roulage sur une période donnée, selon lequel on mesure la pression au cours de la période, en chaque point de mesure de pression, on détermine la pression, dite de référence, du même pneumatique soumis à une charge constante et connue par intervalle de temps et, en chaque point de mesure de pression, on calcule la variation de charge à partir de la différence entre la pression mesurée et la pression de référence et d'un modèle du pneumatique établi au préalable et liant une variation de charge à une variation de pression.

Au sens de l'invention, la charge dynamique est assimilée à la variation de charge que subit le pneumatique en roulage.

Un intervalle de temps correspond avantageusement à un état de charge du véhicule et donc à une charge statique constante transportée par chacun des pneumatiques.

Au sens de l'invention, la charge statique est la charge portée par le pneumatique, le véhicule étant à l'arrêt sur un sol plan.

Considérant que les variations de pression au sein du pneumatique sont d'une part liées aux variations de charges portées par le pneumatique et d'autre part aux variations de température de l'air de gonflage, les inventeurs ont su s'affranchir de la mesure de température et se limiter à la seule mesure de la pression pour déterminer les charges dynamiques portées par un pneumatique. Les inventeurs ont su mettre en évidence que les fréquences auxquelles varient la pression et la température de l'air de gonflage sont différentes selon qu'elles sont dues aux échanges thermiques avec le pneumatique ou bien la jante ou qu'elles sont dues aux variations de charges induites par le roulage du pneumatique.

En effet, ils ont su montrer que les variations à basses fréquences sont dues à un échauffement par échanges de chaleur avec le pneumatique et la jante. L'échauffement du pneumatique est du aux phénomènes d'hystérèse des matériaux qui le constituent et donc des sollicitations que subissent ces matériaux lors des roulages. L'échauffement de la jante est du à la présence des dispositifs de freinage et de transmission dans la roue. Compte tenu de la forte inertie thermique du pneumatique et de la jante, les fréquences associées aux variations de température et de pression de l'air de gonflage liés à ces phénomènes sont très inférieures à 1 Hz.

Par ailleurs, ils ont su montrer que les variations de pression liées aux variations de charge, qui correspondent à des mises en compression de l'air de gonflage lors d'un écrasement ou bien d'une détente lorsque la cavité du pneumatique reprend son volume initial, se produisent à des fréquences généralement de l'ordre de 1 à 2 Hz voire supérieures.

Conformément à l'invention, la mesure de pression au cours de la période est utilisée pour déterminer la pression de référence du pneumatique soumis à une charge constante et connue par intervalle de temps. La mise en évidence des différentes fréquences a permis aux inventeurs d'envisager un traitement du signal mesuré sur la période considérée pour éliminer l'effet des variations de charge et ainsi définir en chaque point une pression de référence qui évolue du fait des variations de température sur la période de mesure et donc correspond à un usage du pneumatique à charge constante.

Puis connaissant cette pression de référence en chaque point de mesure de la pression, il est possible de calculer la variation de pression entre la pression mesurée et la pression de référence déterminée.

Et enfin, à partir d'un modèle du pneumatique établit au préalable liant une variation de charge à une variation de pression par rapport à un état initial connu, de déterminer la charge dynamique portée par le pneumatique.

Selon la relation entre variation de charge et variation de pression établie comme modèle, la charge moyenne obtenue peut être différente de la charge statique connue. Dans ce cas, il est nécessaire de corriger globalement la pression de référence et d'itérer le calcul des variations de pression et l'établissement des variations de charge.

Selon un mode de réalisation préféré de l'invention, la détermination de la pression de référence du même pneumatique soumis à une charge constante par intervalle de temps est obtenue par ajustement d'un polynôme sur le signal mesuré pour chaque intervalle de temps de la mesure de la pression. Une telle réalisation permet de s'affranchir simplement des variations aux fréquences les plus élevées pour ne faire ressortir que la variation de pression à basse fréquence due aux variations de températures provenant des matériaux du pneumatique ou de la roue. La charge constante par intervalle de temps correspond à la charge portée par le pneumatique lorsque le véhicule est à l'arrêt sur un sol plan, durant chacun des ces intervalles de temps.

Cette charge constante par intervalle de temps est par exemple connue par des pesées effectuées par pneumatique pour chacun des intervalles de temps ou bien rendue accessible par les dispositifs d'estimation de charge portée liés aux éléments de suspension.

Selon d'autres modes de réalisation de l'invention, la détermination de la pression de référence du même pneumatique soumis à une charge constante peut être réalisée par tout autre type de traitement du signal tel que des filtres.

Avantageusement selon l'invention, quel que soit le traitement du signal utilisé, celui-ci est mis en oeuvre à l'aide d'un calculateur et de programmes informatiques.

De préférence selon l'invention, le modèle du pneumatique est un système d'abaques et/ou un modèle numérique. Au préalable, il est nécessaire d'avoir établi un tel modèle du pneumatique qui permettra de calculer la variation de charge portée par le pneumatique correspondant à la variation de pression déterminée à partir de la différence entre la pression mesurée et la pression de référence correspondante, dans des conditions thermiques maîtrisées.

Ces conditions thermiques maîtrisées sont avantageusement obtenues avec un modèle basé sur des températures de jante et de pneumatique constantes.

Avantageusement encore selon l'invention, le modèle du pneumatique est déterminé sur un sol semblable à celui de la mesure afin notamment de permettre de tenir compte de l'éventuelle déformation du sol sous le pneumatique qui peut influencer la variation de pression notamment dans le cas d'un sol meuble.

Selon une variante de l'invention, l'usage étant cyclique, le véhicule étant par exemple de type dumper, la période de mesure comprend au moins successivement un intervalle de temps à vide et un intervalle de temps de roulage en charge.

Selon cette variante de l'invention, la seule connaissance de la charge statique portée par le pneumatique lorsque le véhicule est à vide va permettre une estimation de la charge portée par le pneumatique pendant toute la période de mesure. L'information sur la charge portée par le pneumatique lorsque le véhicule n'est pas chargé est communiquée par le constructeur du véhicule ou peut être mesurée par tous moyens connus de l'homme du métier.

La détermination de la pression de référence du même pneumatique soumis à une charge constante est obtenue par ajustement de polynômes sur les signaux mesurés pour les périodes de mesure de la pression lorsque le véhicule est à vide. Une interpolation ou extrapolation de ces signaux pour les périodes de roulage en charge va permettre d'estimer une pression de référence pour ces périodes de roulage en charge, correspondant à une charge constante égale à la charge portée lorsque le véhicule est à vide.

L'invention propose ainsi également un procédé d'estimation de la charge portée par un pneumatique d'un véhicule en roulage sur une période donnée comprenant au moins successivement un intervalle de temps à vide et un intervalle de temps de roulage en charge, selon lequel on mesure la pression au cours de la période ; en chaque point de mesure de pression des phases à vide, on détermine la pression, dite de référence, du même pneumatique soumis à une charge constante, on déduit une pression, dite de référence, en chaque point de mesure de pression des phases de roulage en charge et, en chaque point de mesure de pression, on calcule la charge à partir de la différence entre la pression mesurée et la pression de référence et d'un modèle du pneumatique établi au préalable et liant une variation de charge à une variation de pression.

Comme expliqué précédemment, la déduction de la pression, dite de référence, en chaque point de mesure de pression des phases de roulage en charge du même pneumatique soumis à une charge constante est avantageusement obtenue par interpolation ou extrapolation des signaux déterminés de la pression, dite de référence, du même pneumatique soumis à une charge constante durant les phases à vide.

D'autres détails et caractéristiques avantageux de l'invention ressortiront ci-après de la description d'un exemple de réalisation de l'invention en référence aux figures 1 à 5 qui représentent :
Figure1, un extrait d'un enregistrement de la pression de gonflage d'un pneumatique en fonction du temps,
Figure 2, le résultat du traitement du signal de la figure 1 pour séparer les phases de roulage en charge et à vide,
Figure 3, les courbes des pressions de référence superposée sur le signal de la figure 1 pour chacun des intervalles de temps correspondants à un état de charge connu du véhicule
Figure 4, la courbe de référence superposée sur le signal de la figure 1, correspondant à une charge constante égale à la charge statique lorsque le véhicule est à vide,
Figure 5, une courbe donnant les mesures de charges en fonction du temps.

L'exemple décrit ci-après a été fait sur un dumper de type Komatsu 930E, équipé de six pneumatiques de type 53/80R63, circulant sur les pistes d'une mine à ciel ouvert.

Chacun des six pneumatiques du véhicule comporte un capteur de la pression de gonflage. Il s'agit de capteurs montés sur les valves de gonflage des pneumatiques.

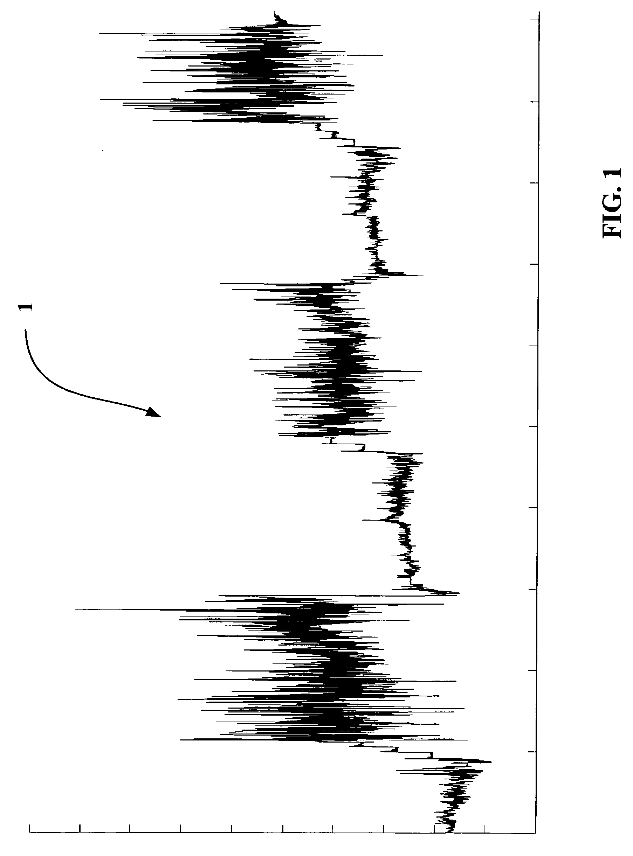

La figure 1 représente un graphique du signal 1 enregistré. Il représente une mesure de la pression de l'air de gonflage du pneumatique en fonction du temps durant une période de trois cycles de roulage, un cycle comportant une phase à vide et une phase de roulage en charge.

Une première étape consiste à identifier les phases correspondant à des états de chargement différents du véhicule, ou plus précisément dans le cas présent, les phases durant lesquelles le véhicule est en charge et les phases durant lesquelles le véhicule circule à vide.

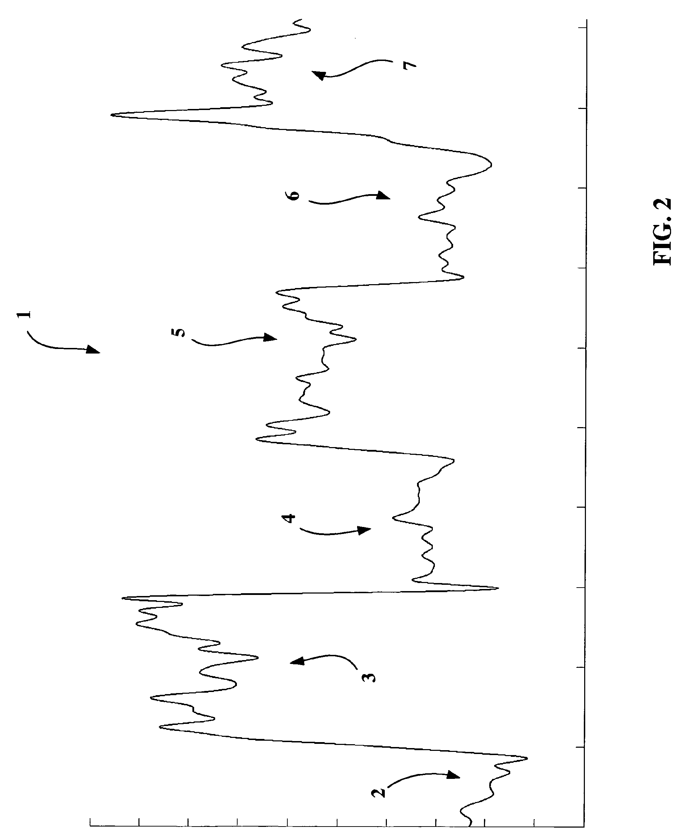

Une telle étape peut être réalisée manuellement par un opérateur par simple observation du signal. Une méthode plus rapide consiste à automatiser cette étape en appliquant par exemple un filtre passe-bande. On vise à éliminer d'une part l'essentiel des variations de pression dues aux variations de température à l'aide d'un filtre passe-haut et l'essentiel des variations de pression liées aux variations de charge dynamique à l'aide d'un filtre passe-bas. Les périodes pendant lesquelles le véhicule est en charge correspondent alors aux périodes pendant lesquelles le signal traité dépasse un seuil donné, et inversement les périodes pendant lesquelles le véhicule est à vide correspondent aux périodes pendant lesquelles le signal traité est sous ce seuil. Le résultat de cette étape est représenté sur la figure 2. Les zones de valeurs de pression les plus faibles 2, 4, 6 correspondent à des phases de circulation à vide et les zones de valeurs de pression les plus élevées 3, 5, 7 correspondent à des phases de circulation en charge.

Dans le cas où la charge statique portée par le pneumatique est connue pour chacune des phases décrites ci-dessus, par exemple au moyen de pesées, la deuxième étape consiste à déterminer pour chaque point de mesure de chaque phase, prise séparément, une pression de référence correspondant à la pression qu'aurait le pneumatique soumis aux mêmes variations de température et à une charge constante et égale à la charge statique.

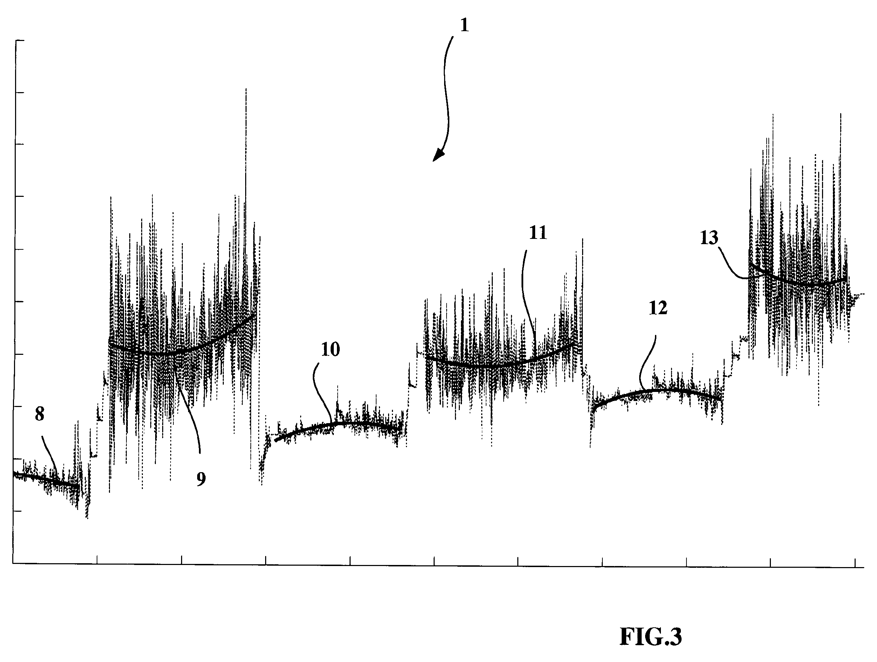

Cette deuxième étape est réalisée soit par un traitement de type filtre passe-bas pour éliminer les variations liées à la dynamique du véhicule sur les zones de roulage à vide soit par un ajustement polynomial sur le signal mesuré pour chacune de ces phases. Nous obtenons ainsi une estimation des pressions de référence, représentées sur la figure 3 par les courbes 8, 9, 10, 11, 12 et 13.

Les inventeurs proposent encore pour améliorer leur estimation de ces pressions de référence d'éliminer le début et la fin de chacune des phases pour ne pas prendre en compte les temps correspondant aux périodes de chargement et de déchargement.

Dans le cas où seule la charge statique correspondant au véhicule vide est prise en compte, la deuxième étape du traitement du signal consiste en repartant du signal de mesure et ayant conformément à la première étape située chronologiquement les différentes phases durant lesquelles le véhicule est en charge et les phases durant lesquelles le véhicule circule à vide, à déterminer pour chaque point de mesure des phase de roulage à vide une pression de référence correspondant à la pression qu'aurait le pneumatique soumis aux mêmes variations de température mais à une charge constante et égale à celle qu'il porte lorsque le véhicule n'est pas chargé.

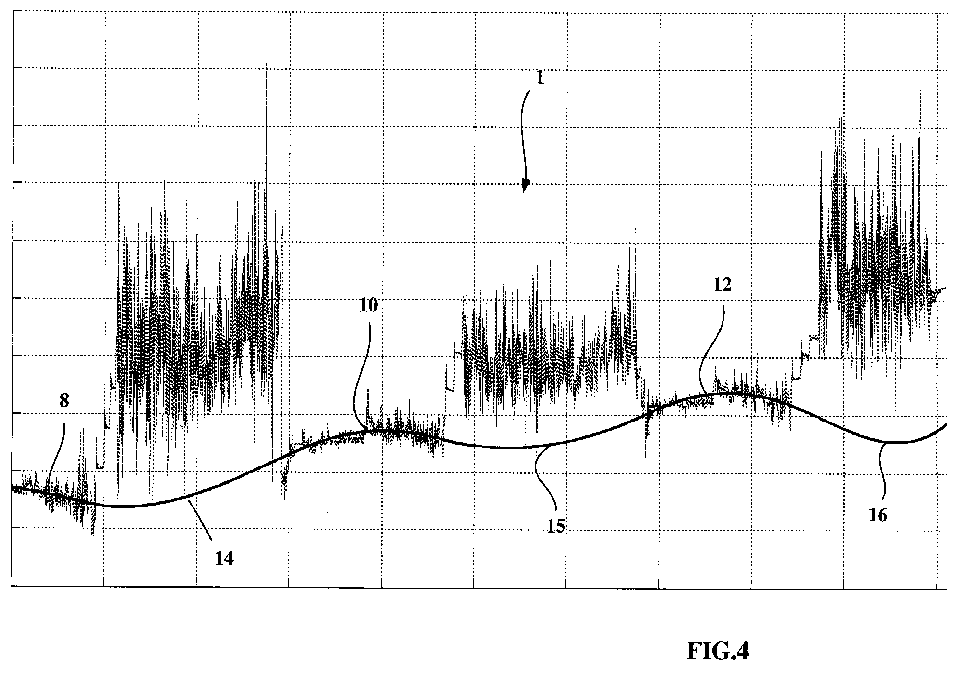

Comme précédemment, cette deuxième étape est réalisée soit par un traitement de type filtre passe-bas pour éliminer les variations liées à la dynamique du véhicule sur les zones de roulage à vide soit par un ajustement polynomial sur le signal mesuré pour ces zones. Nous obtenons ainsi une estimation de la pression de référence, représenté sur la figure 4 par les portions de courbe 8, 10, 12 de chacune des zones 2, 4, 6 correspondent aux phases à vide.

Les inventeurs proposent comme précédemment pour améliorer leur estimation de ces pressions de référence d'éliminer le début et la fin de chacune des zones à vide pour ne pas prendre en compte les temps correspondant aux périodes de chargement et de déchargement.

Toujours dans le cas où seule la charge statique correspondant au véhicule vide est prise en compte, une troisième étape consiste à interpoler ou extrapoler les courbes obtenues sur les zones à vide pour estimer la pression de référence dans les zones de roulage en charge. Les inventeurs proposent d'effectuer des interpolations polynomiales entre chacune des courbes obtenues sur les zones de roulage à vide. Cela conduit à des portions de courbe 14, 15, 16.

Dans tous les cas, lors de l'étape suivante, il est possible en chacun des points de mesure d'effectuer la différence entre la pression mesurée et la pression de référence.

La variation de pression ainsi obtenue est traduite en une variation de charge à partir d'un modèle défini au préalable.

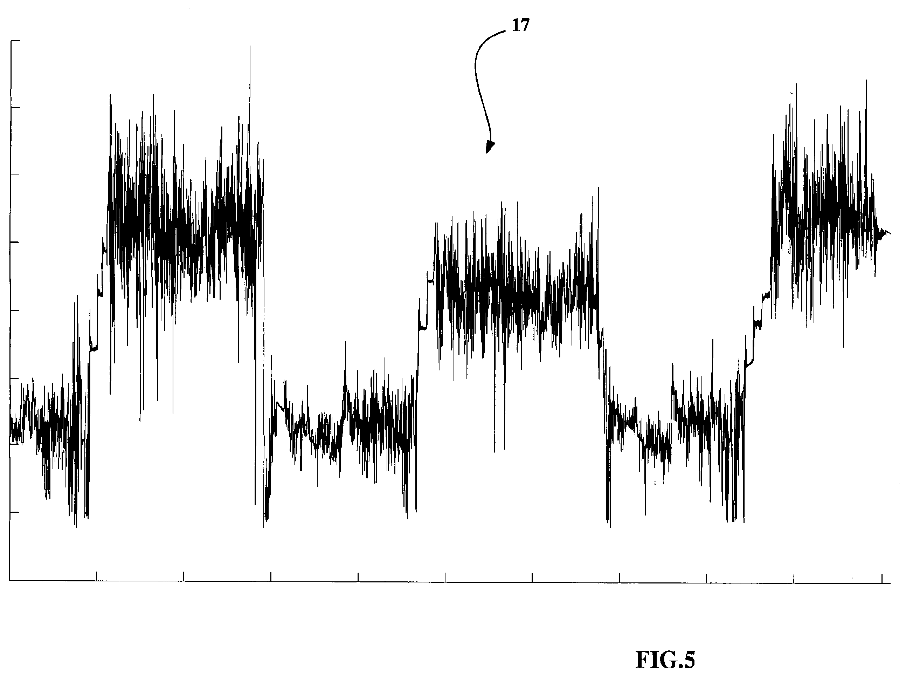

La figure 5 illustre par la courbe 17 la charge portée par le pneumatique ainsi obtenue en fonction du temps.

Conformément à ce qui a été présenté précédemment, une telle estimation de la charge portée par les pneumatiques équipant un dumper va permettre de mieux comprendre l'origine de certaines avaries et permettre d'adapter la conception des pneumatiques aux usages auxquels ils sont soumis.

Ces informations sur la charge portée par un pneumatique peuvent encore apporter d'autres avantages. Par exemple, il est possible d'apporter des conseils à l'utilisateur, c'est-à-dire au conducteur du véhicule, notamment en lui faisant corriger sa conduite en certaines circonstances en vue de diminuer les variations de charge sur certains pneumatiques à certains endroits des pistes sur lesquelles il circule. Par exemple, préconiser un ralentissement sur une zone dans lequel cela ne semble pas nécessaire peut permettre de réduire un freinage ultérieur et de ce fait le report de charge créé sur les pneumatiques du train avant du véhicule ou bien de limiter les oscillations. Une telle correction de la conduite peut ainsi permettre d'éviter de faire supporter aux pneumatiques des valeurs de charges trop importantes conduisant à d'éventuels dommages du pneumatique. Pour une telle application, il est avantageux d'effectuer le calcul de la pression de référence et de la charge en temps réel.

Il est également possible de fournir des indications sur la thermique des pneumatiques. En effet, la connaissance des charges portées par les différents pneumatiques, combinée à une mesure de la vitesse, permet d'accéder au TKPH (Tonne.Kilomètre par heure) de chacun des pneumatiques.

Outre les informations sur le pneumatique, ces informations sur la charge portée par un pneumatique peuvent également permettre de connaître la charge globale transportée par le véhicule.

Il est encore possible d'utiliser ces informations sur la charge portée par chacun des pneumatiques pour améliorer le tracé ou l'entretien des pistes dès lors que les charges dynamiques sont jugées trop importantes.

## Revendications

1. Procédé d'estimation de la charge dynamique portée par un pneumatique d'un véhicule en roulage sur une période donnée **en ce qu**'on mesure la pression au cours de la période, en ce qu'en chaque point de mesure de pression, on détermine la pression, dite de référence, du même pneumatique soumis à une charge constante et connue par intervalle de temps et caracterisé **en ce qu**'en chaque point de mesure de pression, on calcule la variation de charge à partir de la différence entre la pression mesurée et la pression de référence et d'un modèle du pneumatique établi au préalable et liant une variation de charge à une variation de pression.

2. Procédé selon la revendication 1, **caractérisé en ce que** la détermination de la pression de référence du même pneumatique soumis à une charge constante par intervalle de temps est obtenue par ajustement d'un polynôme sur le signal mesuré pour chaque intervalle de temps de la mesure de la pression.

3. Procédé selon la revendication 1 ou 2, **caractérisé en ce que** le modèle du pneumatique est un système d'abaques et/ou un modèle numérique.

4. Procédé selon la revendication 1 à 3, **caractérisé en ce que** le modèle du pneumatique est déterminé sur un sol semblable à celui de la mesure.

5. Procédé selon l'une des revendications précédentes, le véhicule étant par exemple de type dumper, **caractérisé en ce que** la période de mesure comprend au moins successivement un intervalle de temps à vide et un intervalle de temps de roulage en charge.

6. Procédé selon la revendication 5, **caractérisé en ce que** la détermination de la pression de référence du même pneumatique soumis à une charge constante est obtenue par ajustement de polynômes sur les signaux mesurés pour les périodes de mesure de la pression lorsque le véhicule est à vide et par interpolation ou extrapolation de ces signaux pour les périodes de roulage en charge.

## Patentansprüche

1. Verfahren zum Schätzen der dynamischen Last, die von einem Luftreifen eines rollenden Fahrzeugs während einer gegebenen Zeitdauer getragen wird, wobei der Druck im Verlauf der Zeitdauer gemessen wird und an jedem Druckmesspunkt der so genannte Referenzdruck desselben Luftreifens, der einer pro Zeitintervall konstanten und bekannten Last unterliegt, gemessen wird, **dadurch gekennzeichnet, dass** an jedem Druckmesspunkt die Veränderung der Last anhand der Differenz zwischen dem gemessenen Druck und dem Referenzdruck und anhand eines Modells des Luftreifens, das im Voraus erstellt worden ist und eine Laständerung mit einer Druckänderung in Beziehung setzt, berechnet wird.

2. Verfahren nach Anspruch 1, **dadurch gekennzeichnet, dass** das Bestimmen des Referenzdrucks desselben Luftreifens, der einer pro Zeitintervall konstanten Last unterliegt, durch Anpassen eines Polynoms an das gemessene Signal für jedes Zeitintervall der Druckmessung erhalten wird.

3. Verfahren nach Anspruch 1 oder 2, **dadurch gekennzeichnet, dass** das Modell des Luftreifens ein Tabellensystem und/oder ein digitales Modell ist.

4. Verfahren nach Anspruch 1 bis 3, **dadurch gekennzeichnet, dass** das Modell des Luftreifens auf einem ähnlichen Boden wie jenem der Messung bestimmt wird.

5. Verfahren nach einem der vorhergehenden Ansprüche, wobei das Fahrzeug beispielsweise vom Typ Muldenkipper ist, **dadurch gekennzeichnet, dass** die Messzeitdauer nacheinander wenigstens ein Leer-Zeitintervall und ein Zeitintervall des Rollens unter Last umfasst.

6. Verfahren nach Anspruch 5, **dadurch gekennzeichnet, dass** das Bestimmen des Referenzdrucks desselben Luftreifens, der einer konstanten Last unterliegt, durch Anpassen von Polynomen an die gemessenen Signale für die Messzeitdauern des Drucks, wenn das Fahrzeug leer ist, und durch Interpolation oder Extrapolation dieser Signale für die Zeitdauern des Rollens unter Last erhalten wird.

## Claims

1. Method for estimating the dynamic load borne by a tyre of a vehicle running along over a given period, the pressure being measured during the period, at each pressure measurement point, the pressure, known as the reference pressure, of the same tyre subjected to a load that is constant and known per time interval being determined, **characterized in that,** at each pressure measurement point, the variation in load is calculated from the difference between the measured pressure and the reference pressure and from a model of the tyre devised beforehand and that relates a variation in load to a variation in pressure.

2. Method according to Claim 1, **characterized in that** the reference pressure of the same tyre subjected to a load that is constant per time interval is determined by adjusting a polynomial on the measured signal for each pressure measurement time interval.

3. Method according to Claim 1 or 2, **characterized in that** the model of the tyre is a system of graphs and/or a numerical model.

4. Method according to Claim 1 to 3, **characterized in that** the model of the tyre is determined on ground similar to that used for measurement.

5. Method according to one of the preceding claims, the vehicle for example being of the dumper type, **characterized in that** the measurement period comprises at least in succession an unladen time interval and a time interval of laden running.

6. Method according to Claim 5, **characterized in that** the reference pressure of the same tyre subjected to a load that is constant is determined by adjusting a polynomial on the measured signals for the pressure measurement periods when the vehicle is unladen, and by interpolating or extrapolating these signals for the periods of laden running.
